# EUROPEAN PATENT SPECIFICATION

(11) **EP 4 059 185 B1**
(45) Date of publication and mention of the grant of the patent: **03.09.2025**
(21) Application number: 20800630.4
(22) Date of filing: 02.11.2020
(51) Int. Cl.: H04L 9/40

(54) **METHOD AND APPARATUS FOR DETECTION OF HTTP TUNNELS PRESENT IN DATA COMMUNICATION NETWORK**
VERFAHREN UND VORRICHTUNG ZUR DETEKTION VON IN EINEM DATENKOMMUNIKATIONSNETZ VORHANDENEN HTTP-TUNNELN
PROCÉDÉ ET APPAREIL DE DÉTECTION DE TUNNELS HTTP PRÉSENTS DANS UN RÉSEAU DE COMMUNICATION DE DONNÉES

(43) Date of publication of application: 21.09.2022
(73) Proprietor: Huawei Technologies Co., Ltd., Shenzhen, Guangdong 518129 (CN)
(72) Inventor: SRNDIC, Nedim, 80992 Munich (DE); MAZZA, Filippo, 80992 Munich (DE)
(74) Representative: MERH-IP Matias Erny Reichl Hoffmann Patentanwälte PartG mbB
(86) International application number: PCT/EP2020/080626
(87) International publication number: WO 2022/089765

(56) References cited:
- CN-A- 109 600 394
- HONG YANG ET AL: "Iterative-tuning support vector machine for network traffic classification", 2015 IFIP/IEEE INTERNATIONAL SYMPOSIUM ON INTEGRATED NETWORK MANAGEMENT (IM), IEEE, 11 May 2015 (2015-05-11), pages 458 - 466, XP033167816, DOI: 10.1109/INM.2015.7140323
- NIGEL WILLIAMS ET AL: "A preliminary performance comparison of five machine learning algorithms for practical IP traffic flow classification", COMPUTER COMMUNICATION REVIEW, ACM, NEW YORK, NY, US, vol. 36, no. 5, 10 October 2006 (2006-10-10), pages 5 - 16, XP058231820, ISSN: 0146-4833, DOI: 10.1145/1163593.1163596

## Description

### TECHNICAL FIELD

The disclosure relates generally to data communication and network security; more specifically, the disclosure relates to a method and an apparatus for detection of one or more hypertext transfer protocol (HTTP) tunnels present in a data communication network.

### BACKGROUND

Generally, a hypertext transfer protocol (HTTP) tunneling is defined as a technique which allows various network restrictions to be bypassed (e.g. a firewall or a secure web gateway) in order to connect to a blocked destination or communicate by use of an otherwise prohibited or an unsupported protocol (e.g. a secure shell (SSH) protocol or a file transfer protocol (FTP)). The HTTP tunneling is typically used in restricted networks, for example an enterprise network. The reason therebehind is that a HTTP traffic is generally allowed in the restricted networks and a HTTP tunnel can potentially mix up with HTTP traffic. In this way, a HTTP tunnel can potentially be used to evade network policies and controls. In a typical data communication network, a tunnel communicating over an encapsulation protocol is used to implement a payload protocol. However, in the case of HTTP tunneling, a HTTP protocol is used as the encapsulation protocol which disguises the communication of the payload protocol as the HTTP traffic. The various examples of the payload protocol are HTTP protocol (when an external destination host is not directly accessible by an internal host), file transfer protocol (FTP), secure shell (SSH) protocol (when these protocols are prohibited), and so forth. Typically, in order to create a HTTP tunnel in an enterprise network, an internal host uses an HTTP tunnel client (software) to connect to an HTTP tunnel server (software) which is running on an allowed or reachable external destination host. An external server terminates the HTTP tunnel and relays the communication which is established over the payload protocol between the internal host and an otherwise not reachable final destination host. The data traffic between the internal host (or the HTTP tunnel client) and the external server uses the HTTP protocol.

Generally, various mutually different types of HTTP tunneling tools are available for download online and these are easily deployable. However, there are some legitimate uses of HTTP tunnels, for example, a few antivirus products use HTTP tunnels to upload suspicious files to a cloud network, a few remote desktop products use HTTP tunnels in a case when other ports are blocked and the like. The HTTP tunnels are natively supported in the HTTP protocol by use of a conventional CONNECT HTTP method. Frequently, the HTTP tunnels are used to perform malicious activity because they can disguise a given communication and bypass various restriction rules. An illegitimate use of HTTP tunnels includes command-and-control communication or data exfiltration.

Currently, certain approaches have been proposed for countering HTTP tunnels in a typical data communication network; example of such approaches include a conventional mitigation approach and a conventional detection approach. The conventional mitigation approach is based on software installation restrictions and monitoring or simple heuristics. The conventional detection approach based on signatures has a limitation of being easy to evade. This limitation is partially alleviated by use of another conventional detection approach based on machine learning which uses one or more data packets' features. The conventional detection approach based on machine learning uses statistical features of the one or more data packets such as mean and variance of the one or more data packets, the one or more data packets' length, interarrival times of the one or more data packets, etc. Therefore, in the conventional detection approach based on machine learning which uses the one or more data packets' features, there is a requirement to collect all the data packets. In other words, there is a requirement to inspect full network traffic which is also known as a deep packet inspection (DPI) technique. The deep packet inspection (DPI) technique is privacy-intrusive and incurs high computational costs. The reason is that in large enterprise networks or corporate networks, HTTP traffic is highly voluminous, wherein the collection and inspection of each data packet for detection of HTTP tunnels incurs high computational costs and demanding hardware requirements and hence, not preferred. Thus, there exists a technical problem of an inefficient detection of HTTP tunnels in typical contemporary data communication network, wherein the technical problem manifests itself as high computational costs and demanding hardware requirements.

Chinese patent application CN109600394 is further background art.

Therefore, in light of the foregoing discussion, there exists a need to overcome the aforementioned drawbacks associated with the conventional detection approaches used for detecting the HTTP tunnels present in the typical data communication network.

### SUMMARY

The disclosure seeks to provide a detection method for efficiently detecting one or more HTTP tunnels present in a data communication network with improved detection accuracy and less computational cost. The present disclosure seeks to provide a solution to the existing problem of an inefficient detection of the HTTP tunnels present in a typical data communication network, wherein the problem manifests in high computational costs and demanding hardware requirements. An aim of the present disclosure is to provide a solution that overcomes at least partially the problems encountered in prior art, and to provide a detection method for efficiently detecting one or more HTTP tunnels present in a data communication network with improved detection accuracy and less computational cost.

The object of the disclosure is achieved by the solutions provided in the enclosed independent claims. Advantageous implementations of the disclosure are further defined in the dependent claims.

In one aspect, the disclosure provides a method for detecting one or more HTTP tunnels present in a data communication network. The method includes: (a) using a collecting device arrangement to gather data from data flows occurring between network devices coupled to the data communication network; (b) processing the gathered data to generate a plurality of parameter fields that are representative of characteristics of the data flows; (c) processing a subset of the parameter fields and their associated one or more parameters according to one or more pre-defined rules; and (d) applying the processed subset of parameters to an artificial intelligence engine to identify whether or not at least a portion of the gathered data corresponding to one or more types of HTTP tunnels being present in the data communication network.

The method of the disclosure provides an efficient detection of the one or more HTTP tunnels present in the data communication network with improved detection accuracy and less computational cost. The use of pre-defined rules in order to process the parameters fields and their associated parameters in combination with the artificial intelligence engine enables to detect hidden data representatives of the one or more HTTP tunnels. Additionally, the disclosed method does not require the entire network traffic to be analyzed in order to detect the HTTP tunnels which is in contrast to a conventional deep packet inspection (DPI) technique.

Therefore, the volume of data collected by the collecting device arrangement is less which incurs less computational complexity and less demanding hardware requirements.

In an implementation form, the one or more pre-defined rules are implemented using at least one of: one or more formulae, one or more algorithmic steps.

The use of one or more formulae or algorithmic steps provides an efficient computation in comparison to identifying correlations which are computationally more complex and demanding on computing effort.

In a further implementation form, the method includes in (b) (i.e. in operation of the processing of the gathered data) using an Internet Protocol Flow Information Export (IPFIX) protocol algorithm to generate the parameters.

It is advantageous to derive the parameters by use of IPFIX protocol because IPFIX protocol is a readily available off-the-shelf software tool that provides aggregated parameters of HTTP activity. The use of IPFIX enables the disclosed method to be readily implementable for commercial use.

In a further implementation form, the method includes in (a) (i.e. in operation of using the collecting device arrangement to gather data) using the collecting device arrangement to gather data from at least one of: routers, switches, mirrored ports (SPANs) and test access point (TAP) devices.

It is advantageous to use routers, switches, mirrored ports (SPANs) or test access point (TAP) devices as the collecting device in order to gather data because these devices provide pertinent representations of HTTP data traffic.

In a further implementation form, the method includes in (c) (i.e. in the operation of processing the subset of the parameter fields), processing one or more parameters that are representative of a degree of inactivity present in a given communication between a source and a destination.

The degree of inactivity is a very telling parameter for detecting HTTP tunnels.

In a further implementation form, the degree of inactivity is derived from a sum of time durations between consecutive IPFIX data flows of the given communication, in relation to a total duration of the given communication.

The degree of inactivity computed in such a way provides a pertinent detection of HTTP tunnels.

In a further implementation form, the method includes in (c) (i.e. in the operation of processing the subset of the parameter fields) processing, in the subset of parameters, one or more parameters that are representative of occurrences of HTTP requests with specific HTTP methods between a given source and a given destination within the data communication network, normalized to a total count of HTTP requests occurring within the data communication network.

The frequency of HTTP requests is a potential indicative of HTTP tunnels.

In a further implementation form, the method includes categorizing the HTTP methods of the HTTP requests into following categories: GET, POST and "OTHER".

The use of HTTP methods of HTTP requests such as GET, POST and "OTHER" provide a pertinent detection of HTTP tunnels.

In a further implementation form, the "OTHER" HTTP methods include: HEAD, PUT, DELETE, CONNECT, OPTIONS, TRACE, PATCH.

Different HTTP methods such as, HEAD, PUT, DELETE, CONNECT, OPTIONS, TRACE, PATCH are used to detect upload and download HTTP traffic within the data communication network.

In a further implementation form, the method includes in (c) (i.e. in the operation of processing the subset of the parameter fields) computing, in the subset of parameters, one or more parameters that are representative of a spread of starting times of requests from a given source to a given destination within the data communication network.

The spread of starting times of requests from the given source to the given destination within the data communication network is highly informative of a potential occurrence of the HTTP tunnels.

In a further implementation form, the method includes detecting an HTTP tunnel by detecting multiple start requests that occur substantially simultaneously.

The detection of multiple start requests that occur substantially simultaneously provides a more precise detection of the HTTP tunnel.

In a further implementation form, the method includes computing a standard deviation of, or a statistical value of, timestamps of IPFIX data flows, normalized to a total length of an associated communication.

The computation of the standard deviation or the statistical value of timestamps of IPFIX data flows enables a more precise detection of the HTTP tunnels.

In a further implementation form, the timestamps of IPFIX data flows include start timestamps of IPFIX data flows.

The start timestamps of IPFIX data flows provides a more precise detection of the HTTP tunnels.

In a further implementation form, the method includes in (c) (i.e. in the operation of processing the subset of the parameter fields) processing, in the subset of parameters, one or more parameters that are representative of bidirectional communications of HTTP tunnels, by detecting superposition of data flows occurring within the data communication network between a given source and a given destination.

The detection of bidirectional data flows is useful for detecting hostile HTTP tunnels which are used to steal data from a given user.

In a further implementation form, the method includes processing one or more parameters based on computing a duration of communications having N data flows active within a given duration of time, normalized to a total duration of the communications, wherein N is an integer.

The detection of time durations of bi-directional data flows provides an especially effective way to detect hostile HTTP tunnels.

In a further implementation form, the method includes in (c) (i.e. in the operation of processing the subset of the parameter fields) processing, in the subset of parameters, one or more parameters that are representative of upload and download channels being used for a given communication, to determine whether the channels correspond predominantly to an upload data flow or a download data flow.

The determination of the upload and download channels enables a pertinent detection of hostile HTTP tunnels activity.

In a further implementation form, the method includes detecting an HTTP tunnel by comparing the number of distinct ports that are opened for a given HTTP communication with at least one detection threshold number, where an HTTP tunnel is detected when the number of distinct ports exceeds the at least one detection threshold number.

Hostile HTTP tunnels potentially seek to hide their presence when the number of distinct ports that are opened for the given HTTP communication is large. Such an evasive activity (i.e. hostile HTTP tunnels) can be detected when the number of distinct ports that are opened exceeds the at least one detection threshold number.

In a further implementation form, the method includes in (c) (i.e. in the operation of processing the subset of the parameter fields) processing, in the subset of parameters, one or more parameters that are representative of a temporal overlap between upload and download channels present within the data communication network as a function of elapsed time, wherein the channels are deemed to be overlapping if their data flows are mutually simultaneously active.

The detection of the temporal overlap between upload and download channels present within the data communication network is an effective way to detect hostile HTTP tunnels activity. It will be appreciated that normal HTTP communications seldomly overlap in upload and download, because a normal HTTP communication transfers either a request or a response at any given time. An exception might be bidirectional streaming, for example an audio or video call over HTTP, but that is already a kind of payload protocol (i.e. tunnel) that is just potentially used for benign purposes. In contradistinction, an example hostile tunnel potentially uses payload protocols which require simultaneous upload and download, in a manner akin to when data is transferred bidirectionally over SSH or RDP. Thus, a detection of overlap can be used to used to identify potentially hostile HTTP tunnels.

In a further implementation form, the method includes detecting an HTTP tunnel when the temporal overlap when normalized over a duration of a communication or temporal window size in which data flows are sampled exceeds at least one detection threshold.

The normalized temporal overlap enables a more precise detection of hostile HTTP tunnels.

In a further implementation form, the method includes in (c) (i.e. in the operation of processing the subset of the parameter fields) processing, in the subset of parameters, one or more parameters that are representative of a measure of sparsity of HTTP activity in a given period in which HTTP flows are active, normalized to a total HTTP activity during the given period.

The measure of sparsity enables a more precise detection of hostile HTTP tunnels.

In a further implementation form, the method includes in (c) (i.e. in the operation of processing the subset of the parameter fields) processing, in the subset of parameters, one or more parameters that are representative of groupings of HTTP communications between a plurality of hosts by considering n-tuples comprising a source address, a destination address, a source port and a destination port, and a protocol wherein "n" is an integer.

The groupings of HTTP communications reduces the memory consumption and improves overall speed.

In a further implementation form, the method includes using the artificial intelligence engine to identify from the one or more selected parameters an occurrence of at least one of: (a) a streaming tunnel, wherein a content of a payload protocol is streamed in real-time using a request/response body; and (b) a discrete tunnel, wherein a content of a payload protocol is delivered in discrete data chunks in a non-streamed manner.

The identification of the streaming tunnel and the discrete tunnel enables a more precise analysis of the HTTP traffic.

In another aspect, the disclosure provides an apparatus that is configured to detect one or more HTTP tunnels present in a data communication network. The apparatus includes: (a) a collecting device arrangement that is configured to gather data from data flows occurring between network devices coupled to the data communication network; (b) a data processing arrangement that is configured to process the gathered data to generate a plurality of parameter fields that are representative of characteristics of the data flows; (c) the data processing arrangement that is further configured to process a subset of the parameter fields and their associated one or more parameters according to one or more pre-defined rules; and (d) an artificial intelligence engine that is configured to process the subset of parameters to identify whether or not at least a portion of the gathered data corresponding to one or more types of HTTP tunnels being present in the data communication network.

The apparatus of the disclosure achieves all the advantages and effects of the disclosed method of the disclosure.

In a yet another aspect, the disclosure provides a computer program product comprising a non-transitory computer-readable storage medium having computer-readable instructions stored thereon, the computer-readable instructions being executable by a computerized device comprising processing hardware to execute the method.

The computer program product achieves all the advantages and effects of the method of the disclosure.

It has to be noted that all devices, elements, circuitry, units and means described in the disclosure could be implemented in the software or hardware elements or any kind of combination thereof. All steps which are performed by the various entities described in the disclosure as well as the functionalities described to be performed by the various entities are intended to mean that the respective entity is adapted to or configured to perform the respective steps and functionalities. Even if, in the following description of specific implementations, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the disclosure are susceptible to being combined in various combinations without departing from the scope of the disclosure as defined by the appended claims.

Additional aspects, advantages, features and objects of the disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative implementations, is better understood when read in conjunction with the appended drawings. For the purpose of illustrating implementations the disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Implementations of the present disclosure will now be described, by way of example only, with reference to the following diagrams wherein:
- FIG. 1: is a flowchart of a method for detecting one or more HTTP tunnels present in a data communication network, in accordance with an implementation of the disclosure;
- FIG. 2A: is a network environment diagram that depicts an exemplary detection of one or more HTTP tunnels present in a data communication network, in accordance with an implementation of the disclosure;
- FIG. 2B: is a network environment diagram that depicts an exemplary detection of one or more HTTP tunnels present in a data communication network, in accordance with another implementation of the disclosure;
- FIG. 2C: is a block diagram that illustrates various exemplary components of the apparatus of FIG. 2A, in accordance with an implementation of the disclosure; and
- FIG. 3: is a flowchart that depicts exemplary operations for detecting one or more HTTP tunnels present in a data communication network, in accordance with another implementation of the disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the disclosure and ways in which they can be implemented. Although some modes of carrying out the disclosure have been disclosed, those skilled in the art would recognize that other embodiments for carrying out or practicing the disclosure are also possible.

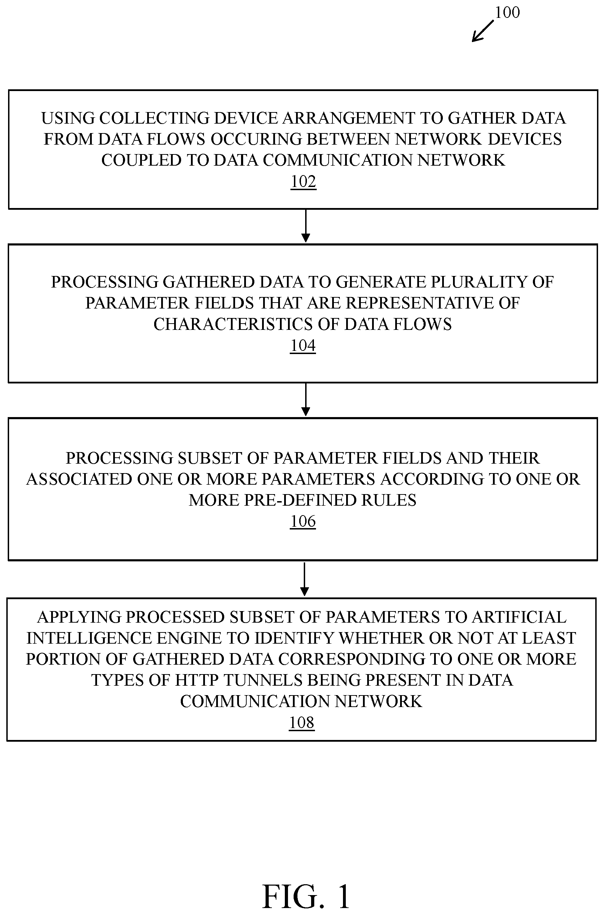

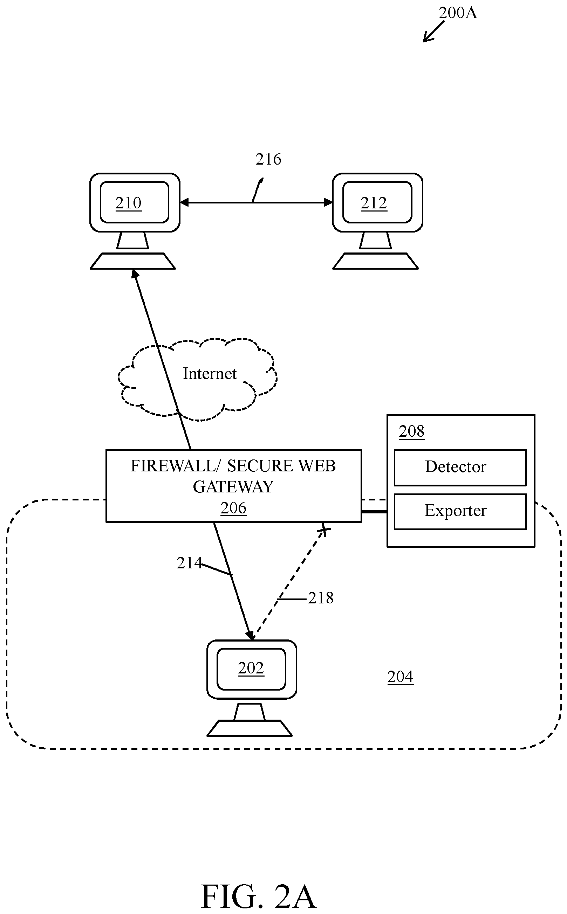

FIG. 1 is a flowchart of a method for (namely, a method of) detecting one or more HTTP tunnels present in a data communication network, in accordance with an embodiment of the disclosure. With reference to FIG. 1, there is shown a method **100** for detecting one or more HTTP tunnels present in a data communication network. The method **100** includes steps **102, 104, 106,** and **108.** In an implementation, the method **100** is executed in an apparatus described in details, for example, in FIGs. 2A-2C.

At the step **102,** the method **100** includes using a collecting device arrangement to gather data from data flows occurring between network devices coupled to the data communication network. The collecting device arrangement is used to gather data for a purpose of monitoring any suspicious activity, for example, hostile HTTP tunnels, present in the data communication network. The gathered data include the information which is not limited to, source and destination IP addresses, source and destination transport ports, flow start time and end time, incoming and outgoing data bytes, used network protocol (e.g. IP protocol), destination uniform resource location (URL) for HTTP flows, etc.

At the step **104,** the method **100** further includes processing the gathered data to generate a plurality of parameter fields that are representative of characteristics of the data flows. The gathered data is further analysed to design a data extraction pipeline and conversation features which allows to detect different types of HTTP tunnels present in the data communication network with a relatively low false detection rate.

At the step **106,** the method **100** further includes processing a subset of the parameter fields and their associated one or more parameters according to one or more pre-defined rules. The subset of parameter fields are processed by use of the one or more pre-defined rules. The processed subset of parameters provide a fine-grained classification of HTTP tunnel traffic into various categories such as data exfiltration or remote code execution. The processed subset of parameters also provides a probability for each potentially overlapping type of attack.

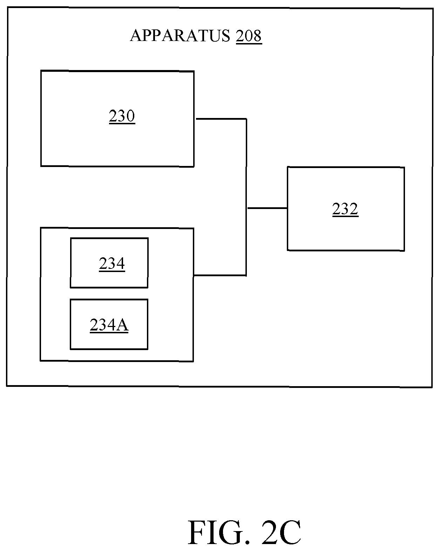

At the step **108,** the method **100** further includes applying the processed subset of parameters to an artificial intelligence engine to identify whether or not at least a portion of the gathered data correspond to one or more types of HTTP tunnels being present in the data communication network. The processed subset of parameters is applied to the artificial intelligence engine which is trained on a large data set to identify whether or not a certain portion of the gathered data corresponds to the one or more HTTP tunnels present in the data communication network. An example of how to obtain a trained artificial intelligence engine is described in detail, for example, in FIG. 2C.

In accordance with an embodiment, the one or more pre-defined rules are implemented using at least one of: one or more formulae, one or more algorithmic steps. In an example, the one or more pre-defined rules used for processing the subset of parameter fields belong to one or more mathematical formulae. In another example, the one or more pre-defined rules used for processing the subset of parameter fields belong to one or more steps of an algorithm or multiple algorithms.

In accordance with an embodiment, the method **100** further includes at the step **104,** using an Internet Protocol Flow Information Export (IPFIX) protocol algorithm to generate the parameters. The IPFIX protocol is used to generate the parameters from the gathered data which allows to detect mutually different types of HTTP tunnels present in the data communication network. An entity extracting information from the network traffic is referred to as "exporter" in IPFIX architecture; it will be appreciated that the exporter processes full network traffic (namely, every packet) in order to generate flow records.

The conventional deep packet inspection (DPI) technique incurs a high computational cost due to a need to have access to each data packet in order to detect HTTP tunnels. However, the IPFIX protocol uses an aggregate information derived from the gathered datavia the exporter; IPFIX therefore provides aggregated information that allows detection of the HTTP tunnels pursuant to embodiments of the disclosure. Therefore, the IPFIX protocol is computationally efficient and cost effective, and simultaneously provides a sufficient information to detect HTTP tunnels with significant detection accuracy in contrast to a conventional NetFlow protocol which lacks the sufficient information for HTTP tunnels detection. Moreover, the IPFIX protocol is widely deployed in large enterprise networks and corporate networks. The IPFIX protocol is an extension of the conventional Netflow protocol with some additional information such as the HTTP request method (e.g. IPFIX information element 459: httpRequestMethod) and the HTTP request host (e.g. IPFIX information element 460: httpRequestHost) for HTTP tunnels detection.

In accordance with an embodiment, the method **100** further includes at the step **102,** using the collecting device arrangement to gather data from at least one of: routers, switches, mirrored ports (SPANs) and test access point (TAP) devices. The data is gathered by use of network devices which are coupled to the data communication network such as routers, switches, mirrored ports (e.g. switch port analyzers (SPANs)), test access point (TAP) devices, or probe devices. Generally, the mirrored ports are designated ports on the network devices such as, the switches or routers which are programmed to send a copy of one or more network packets from one port to another port where the one or more network packets are further analyzed. Similarly, the test access point (TAP) devices are defined as a hardware device which allows to access and monitor the network traffic.

In accordance with an embodiment, the method **100** further includes at the step **106,** processing one or more parameters that are representative of a degree of inactivity present in a given communication between a source and a destination. The degree of inactivity describes how much inactivity is present in the given communication between the source and the destination. In other words, the degree of inactivity describes for how much time duration there is no network traffic in the given communication between the source and the destination.

In accordance with an embodiment, the degree of inactivity is derived from a sum of time durations between consecutive IPFIX data flows of the given communication, in relation to a total duration of the given communication. For example, if the given communication lasts for 5 seconds which includes 2 distinct IPFIX data flows and each IPFIX data flow lasts for 2 seconds with a 1 second pause in between the two IPFIX data flows. In such a case, the degree of inactivity is equal to 20% (= 1/5 ×100). The degree of inactivity is also referred as an inactivity percentage.

In accordance with an embodiment, the method **100** further includes in the step **106** processing, in the subset of parameters, one or more parameters that are representative of occurrences of HTTP requests with specific HTTP methods between a given source and a given destination within the data communication network, normalized to a total count of HTTP requests occurring within the data communication network. The normalized number of HTTP requests represents the relevant number of HTTP requests occurring within the data communication network. The normalized number of HTTP requests deal with specific HTTP methods between the given source and the given destination. The less relevant HTTP requests are aggregated together as one category.

In accordance with an embodiment, the method **100** further includes categorizing the HTTP methods of the HTTP requests into following categories: GET, POST and "OTHER". For example, the output is a set of M numbers where M is the number of HTTP methods considered. Nowadays, there are different types of the HTTP tunnel softwares present online, however, various experiments conducted so far show that, only 3 HTTP methods are enough, being it GET, POST and "OTHER".

In accordance with an embodiment, the "OTHER" HTTP methods include: HEAD, PUT, DELETE, CONNECT, OPTIONS, TRACE, PATCH. Different HTTP methods are used for upload and download HTTP traffic within the data communication network. For example, DELETE, PATCH and PUT are used as upload HTTP methods, whereas, DELETE, CONNECT, OPTIONS, PATCH are used as download HTTP methods.

In accordance with an embodiment, the method **100** further includes in the step **106** computing, in the subset of parameters, one or more parameters that are representative of a spread of starting times of requests from a given source to a given destination within the data communication network. The measurement of the spread of starting times of requests from the given source to the given destination is a potential indicative of occurrence of the HTTP tunnels.

In accordance with an embodiment, the method **100** further includes detecting an HTTP tunnel by detecting whether or not multiple request starts have occurred. Through the HTTP tunnel, multiple start requests are made during a given communication in order to maintain connectivity of the HTTP tunnel. For example, a web page loading usually involves multiple requests at substantially the same time which may refer either to a same or different destinations. Therefore, the detection of multiple start requests provides a pertinent detection of whether or not a HTTP tunnel is present.

In accordance with an embodiment, the method **100** further includes computing a standard deviation of, or a statistical value of, timestamps of IPFIX data flows, normalized to a total length of an associated communication. The spread of starting times of requests from the given source to the given destination is computed as the normalized standard deviation of, or the normalized statistical value of, timestamps of IPFIX data flows which provides a more precise detection of the HTTP tunnels.

In accordance with an embodiment, the timestamps of IPFIX data flows include start timestamps of IPFIX data flows. The timestamps of IPFIX data flows are considered as the start timestamps of IPFIX data flows over a specific time window.

In accordance with an embodiment, the method **100** further includes in the step **106** processing, in the subset of parameters, one or more parameters that are representative of bidirectional communications of HTTP tunnels, by detecting superposition of data flows occurring within the data communication network between a given source and a given destination. The detection of bidirectional data flows is useful for detecting hostile HTTP tunnels which are used to steal data from a given user.

In accordance with an embodiment, the method **100** further includes processing one or more parameters based on computing a duration of communications having N data flows active within a given duration of time, normalized to a total duration of the communications, wherein N is an integer. For example, a data flow is active at a time instance X, and its start time is before or equal to the instance X and end time is after the instance X. The sum of the time instances of superpositions of data flows is normalized over the total duration of the communications. In a case, if time resolution of IPFIX data flows is of a coarse nature which is taken into account by considering a margin M for the end time. For example, a data flow is active if its end time is equal to the instance X in IPFIX with a resolution of 1 second. The coarsity of time resolution of IPFIX data flows is also considered by changing the value of time window (also represented by N) which have starting and ending times within a time span of a subsecond means that start time is equal to end time. In another case, the normalization takes into account the maximum value of the time window (i.e. N) used for the communication windowing, on an "as needed" basis.

In accordance with an embodiment, the method **100** further includes in the step **106,** processing, in the subset of parameters, one or more parameters that are representative of upload and download channels being used for a given communication, to determine whether the channels correspond predominantly to an upload data flow or a download data flow. For example, if received bytes are higher in number than or equal to transmitted bytes in number, then it is considered as the download data flow or otherwise it is the upload data flow. However, a margin can be added to fine tune the separation of the upload data flow and the download data flow. The activity of communication is computed as a product of an activity of upload and an activity of download. The communication activity is computed as complement to 100 of the inactivity percentage (which is calculated at the step **106**) equal to 100 - inactivity percentage. The activity percentage can be simplified as 1-(absolute inactivity).

In accordance with an embodiment, the method **100** further includes detecting an HTTP tunnel by comparing the number of distinct ports that are opened for a given HTTP communication with at least one detection threshold number, where an HTTP tunnel is detected when the number of distinct ports exceeds the at least one detection threshold number. The number of distinct (or transport) ports those are opened for the HTTP communication are considered here. The HTTP tunnel potentially, but not always, opens up a large number of transport ports to establish multiple communication channels due to its tunnel behaviour; the method 100 employs artificial intelligence (AI) tools that identify which case pertains, given the combination of the other features as well. This has particularly more significance in a case of data exfiltration, where, the large number of transport ports are required to transmit larger amount of data. However, when the number of opened distinct (or transport) ports exceeds the at least one detection threshold number, the HTTP tunnel is detected.

In accordance with an embodiment, the method **100** further includes in the step **106,** processing, in the subset of parameters, one or more parameters that are representative of a temporal overlap between upload and download channels present within the data communication network as a function of elapsed time, wherein the channels are deemed to be overlapping if their data flows are mutually simultaneously active. The upload and download channels are considered as overlapping channels in time if any two of their data flows are active at the same time. The temporal overlap corresponds to an overlap in time.

In accordance with an embodiment, the method **100** further includes detecting an HTTP tunnel when the temporal overlap when normalized over a duration of a communication or temporal window size in which data flows are sampled exceeds at least one detection threshold. The HTTP tunnel is detected when either the normalized temporal overlap or the temporal window size in which the sampled data flows exceeds the at least one detection threshold. The HTTP tunnels are expected to have a high temporal overlap due to the nature of the bidirectional communication required for a tunnel client to communicate with a tunnel server; it will be appreciated payload protocols being used may require bidirectional communications.

In accordance with an embodiment, the method **100** further includes in the step **106,** processing, in the subset of parameters, one or more parameters that are representative of a measure of sparsity of HTTP activity in a given period in which HTTP flows are active, normalized to a total HTTP activity during the given period. The measure of sparsity of HTTP activity is computed as a standard deviation of time duration (in seconds) in which data flows are active. At first, an empty list of values is created. Thereafter, each second (of time) between the starting and end of the communication is added to the created list if there is at least one data flow active in that second. There can be pauses in the communication, therefore, not each second is added to the created list. Then, the standard deviation is computed over these values which is further normalized by the total HTTP activity during the given period. The given period is computed as the maximum end time minus the minimum start time.

In accordance with an embodiment, the method **100** further includes in the step **106,** processing, in the subset of parameters, one or more parameters that are representative of groupings of HTTP communications between a plurality of hosts by considering n-tuples comprising a source address, a destination address, a source port and a destination port, and a protocol wherein "n" is an integer. The HTTP communications are logically grouped between the plurality of hosts by considering the n-tuples such as the source address, the destination address, the source port, the destination port and the used network protocol (e.g. IP protocol). The purpose is to reconstruct the whole HTTP communication. The destination address in the aggregation can be of different nature and its function is only to allow a meaningful aggregation of data flows in a logical way that groups together the data flows those related to the same communication. The destination domain gives more insight about the location of the HTTP tunnel tool hosting.

In accordance with an embodiment, the method **100** further includes using the artificial intelligence engine (for example, implemented using a recurrent neural network (for example, a recursive neural network)) to identify from the one or more selected parameters an occurrence of at least one of: a streaming tunnel, wherein a content of a payload protocol is streamed in real-time using a request/response body; and a discrete tunnel, wherein a content of a payload protocol is delivered in discrete data chunks in a non-streamed manner. Based on the analysis of the HTTP traffic by use of publicly available HTTP tunnel tools, the HTTP tunnels are categorized in two methodologies such as the HTTP streaming (or continuous) tunnel and the HTTP discrete tunnel. The HTTP streaming (or continuous) tunnel uses at least two HTTP methods, one for upload HTTP traffic and one for download HTTP traffic. The two HTTP methods belong to the groups:
UPLOAD_HTTP_METHODS = {"DELETE", "PATCH", "PUT", "POST"}
DOWNLOAD_HTTP_METHODS = {"DELETE", "CONNECT", "GET", "OPTIONS", "PATCH", "POST"}

Alternatively, the HTTP streaming (or continuous) tunnel uses only one method if the method allows to have simultaneous upload and download, for example,
BIDIRECTIONAL_HTTP_METHODS = {"DELETE", "PATCH", "POST"}.

The HTTP discrete tunnels present a sufficient number of requests (e.g. number of requests >50) and have a sufficient velocity (e.g. number of requests over time >40% on average). These values are tuned depending on the required metrics (e.g. balance between precision and recall).

FIG. 2A is a network environment diagram that depicts an exemplary detection of one or more HTTP tunnels present in a data communication network, in accordance with an embodiment of the present disclosure. FIG. 2A is described in conjunction with elements from FIG. 1. With reference to FIG. 2A, there is shown a data communication system **200A** that includes an internal host **202** (i.e. a network device) on an enterprise network **204,** a secure web gateway **206,** an internet protocol flow information export (IPFIX) apparatus (hereinafter, simply referred to as an apparatus **208**), a HTTP tunnel server **210,** and a final destination host **212.;** the apparatus **208** is coupled to a detector (not shown) for implementing embodiments of the present disclosure. There is further shown a first HTTP tunnel **214,** a communication path **216** and a dotted line **218** which represents that there is no direct communication between the internal host **202** and the final destination host **212.** It will be appreciated that the encapsulation protocol (HTTP) is terminated at the HTTP tunnel server **210** and only the payload protocol proceeds to the destination host **212.**

The enterprise network **204** is a network of one or more network devices. Examples of the enterprise network **204** include, but are not limited to, a computer network in a computer cluster, a Local Area Network (LAN), a Wireless Local Area Network (WLAN), a Wide Area Network (WAN), or a Metropolitan Area Network (MAN) that are secured by an enterprise-wide firewall. Moreover, the enterprise network **204** is described herein with IP communications protocols, HTTP protocol, file transfer protocol (FTP), secure shell (SSH) protocol and the like protocols. In this embodiment, the enterprise network **204** depicts only one network device, such as the internal host **202.** However, it is to be understood that in practice, many network devices (hundreds or thousands of network devices) will be connected to each other via the enterprise network **204** (e.g. in a LAN), which is omitted here for the sake of brevity.

The secure web gateway **206** is used to monitor and prevent any malicious data from entering and leaving an organization's network such as the enterprise network **204.** The secure web gateway **206** is implemented to provide the security against any threat which is originating from the Internet or any web service. The secure web gateway **206** is implemented either through a hardware or a software which is installed at outer boundaries (e.g. a router) of the organization's network, such as the enterprise network **204.** The secure web gateway **206** applies uniform resource locator (URL) filtering, data leakage prevention, malware detection and the like. The secure web gateway **206** corresponds to a firewall.

The apparatus **208** is configured to detect one or more HTTP tunnels present in a data communication network (e.g. the enterprise network **204**). The apparatus **208** is configured to gather data from data flows occurring between network devices (e.g. the internal host **202** or routers, switches or probe devices when the internal host **202** is connected to such devices) coupled to the data communication network. The apparatus **208** is further configured to process the gathered data to generate a plurality of parameter fields that are representative of characteristics of the data flows. The apparatus **208** is further configured to processes a subset of the parameter fields and their associated one or more parameters according to one or more pre-defined rules, where the subset of parameters is processed to identify whether or not at least a portion of the gathered data corresponding to one or more types of HTTP tunnels is present in the data communication network. For example, the apparatus **208** gathers the data exchanged between the internal host **202** (i.e. the tunnel client) and the HTTP tunnel server **210.** The apparatus **208** analyzes the gathered data, checks the data traffic between the internal host **202** (i.e. the tunnel client) and the HTTP tunnel server **210,** and applies a series of filters, rules and machine learning in order to detect the first HTTP tunnel **214** and the communication path **216.**

In an example, the apparatus **208** may be implemented as a separate device (e.g. a collector device) that is communicatively coupled to a gateway device, such as a main router, which acts as an interface or a secured gateway between the Internet and the enterprise network **204** that is protected by firewall (i.e. the secure web gateway **206**). In another example, the functionalities of the apparatus **208** may be implemented in the gateway device (e.g. a main router) that have access to bi-directional data traffic, i.e. data traffic to- and from- an organization's network (e.g. the enterprise network **204**) and the Internet. The apparatus **208** analyses the IPFIX data gathered from network devices (such as routers, switches or probe devices), checks the activity of hosts (e.g. the internal host **202**) and through a series of filters, rules, and machine learning detects HTTP tunnels.

Typically, the internal host **202** cannot directly communicate with the final destination host **212** which is represented by the dotted line **218** with a cross at its end. This is because of the presence of the secure web gateway **206** on the enterprise network **204** between the internal host **202** and the final destination host **212.** Therefore, the internal host **202** communicates with the final destination host **212** through the HTTP tunnel server **210.** The internal host **202** uses a HTTP tunnel client (e.g. a software) to connect to the HTTP tunnel server **210** (e.g. a software), for example, via the Internet, which allows a further connection to the final destination host **212.** In this way, there exists the first HTTP tunnel **214** between the internal host **202** (i.e. tunnel client) and the HTTP tunnel server **210** and the communication path **216** between the HTTP tunnel server **210** and the final destination host **212.**

The data communication system **200A** deals with the detection of the first HTTP tunnel **214** and the commucation path **216** by inspecting the communication between the internal host **202** (i.e. tunnel client) and the HTTP tunnel server **210.** The first HTTP tunnel **214** and the communication path **216** are detected by use of an aggregate information about the network communications between the internal host **202** (i.e. tunnel client), the HTTP tunnel server **210** and the final destination host **212.** The aggregate information is obtained via an internet protocol flow information export (IPFIX) protocol. The IPFIX protocol is an internet engineering task force (IETF) standard which is documented in RFC 7011 through RFC 7015 and RFC 5103. The IPFIX protocol is based on a notion of a flow of data packets which are exchanged between two endpoints and identified by a quintuple comprising source IP address (e.g. the IP address of the internal host **202** in this case) and destination IP address (e.g. the IP address of the final destination host **212**), source and destination ports and a network protocol (e.g. internet protocol (IP)). From each flow of the data packets, mutually different aggregate information is computed such as, number of incoming or outgoing data packets or data bytes within a specified time window. The different aggregate information is further analyzed in order to detect the first HTTP tunnel **214** and the communiation path **216.** The IPFIX protocol is implemented by use of the apparatus **208** (i.e. an IPFIX-enabled apparatus) in the data communication system **200A.** The apparatus **208** gathers the data exchanged between the internal host **202** (also referred to as the tunnel client) and the HTTP tunnel server **210.** The apparatus **208** analyzes the traffic data (i.e. the gathered data), checks the activity of the internal host **202** (i.e. the tunnel client) that accesses the Internet and connects to the HTTP tunnel server **210,** and applies a series of filters, rules and machine learning in order to detect the first HTTP tunnel **214** and the communication path **216.** The apparatus **208** is described in detail, for example, in FIG. 2C.

Thus, the data communication system **200A** does not inspect full network traffic in contrast to a conventional deep packet inspection (DPI) technique. The conventional deep packet inspection (DPI) technique incurs a high computational cost due to the access to each data packet in order to detect HTTP tunnels. However, the data communication system **200A** uses an aggregate information derived from the gathered data by use of the apparatus **208** in order to detect the first HTTP tunnel **214** and the communication path **216;** it will be appreciated that the apparatus **208** includes a separate IPFIX exporter and a detector that are two mutually distinction functions, wherein the exporter does inspect full network traffic, so that the detector does not have to inspect the full network traffic.

Therefore, the data communication system **200A** is computationally efficient and cost effective, and simultaneously provides a sufficient information to detect the first HTTP tunnel **214** and the communication path **216** with a significant detection accuracy.

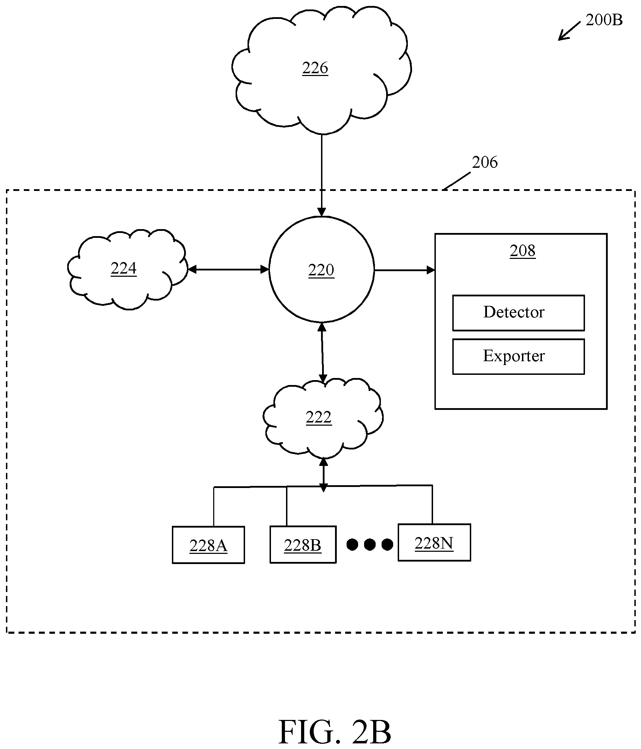

FIG. 2B is a network environment diagram that depicts an exemplary detection of one or more HTTP tunnels present in a data communication network, in accordance with another embodiment of the present disclosure. FIG. 2B is described in conjunction with elements from FIGs. 1 and 2A. With reference to FIG. 2B, there is shown a data communication system **200B** that includes a network device **220,** the apparatus **208,** a first data communication network 222 (e.g. a LAN), a second data communication network **224** (e.g. a WAN), and a third data communication network **226** (i.e. the Internet). There is further shown a plurality of computing devices **228A, 228B,...,228N** (i.e. end-user devices) that are communicatively coupled to the first data communication network **222** (i.e. the LAN). The apparatus **208** may be communicatively coupled to one or more network devices, such as the network device **220.**

In this example, the network device **220** acts as an interface between an enterprise network (e.g. in this case the enterprise network includes the first data communication network **222,** such as LAN, and the second data communication network **224,** such as WAN or WLAN) and the third data communication network **226** (e.g. the Internet). The first data communication network **222** (i.e. the LAN) and the second data communication network **224** (i.e. the WAN) are protected from a malicious attack by the secure web gateway **206** (e.g. a firewall application). The network device **220** may have access to bi-directional data traffic, i.e. data traffic to- and fro-from the plurality of computing devices **228A, 228B,..., 228N** (which are connected to the network device **220** via the first data communication network **222** (i.e. the LAN)). In an implementation, the network device **220** corresponds to a main router. Other examples of the network device **220** include, but is not limited to a router, a switch, a probe device, or a device with mirrored ports of router. Each of the plurality of computing devices **228A, 228B,..., 228N** corresponds to the internal host **202** (of FIG. 2A).

The apparatus **208** is configured to detect one or more HTTP tunnels present in a data communication network (e.g. the first data communication network **222** and/or the second data communication network **224**). The apparatus **208** gathers data from data flows occurring between network devices (e.g. the network device **220**) coupled to the data communication network (e.g. data communication network **222** or **224**). The apparatus **208** analyzes the gathered data, and applies a series of filters, rules and machine learning in order to detect the HTTP tunnels, and output the detected HTTP tunnels to a defined device, such as an analyst device for correction action and avoiding any malicious activity.

FIG. 2C is a block diagram that illustrates various exemplary components of the apparatus of FIG. 2A, in accordance with an embodiment of the present disclosure. FIG. 2C is described in conjunction with elements from FIGs. 1, 2A, and 2B. With reference to FIG. 2C, there is shown the apparatus **208** (of FIG. 2A) that includes a collecting device arrangement **230,** a data processing arrangement **232,** a memory **234,** and an artificial intelligence engine **234A.**

The apparatus **208** filters out non-HTTP and non- transmission control protocol (TCP) data from an input data. The apparatus **208** groups TCP-based HTTP data by use of logical descriptors which uniquely represent the HTTP communication (e.g. source and destination addresses, transport ports, etc.) within one time window. Thereafter, the apparatus **208** applies multiple rule-based filters to remove benign HTTP communications (e.g. too short communications) and computes a plurality of meaningful features which describe the communication behaviour. In a certain case, the apparatus **208** potentially uses a signature based approach in order to detect simplest HTTP communication. In another case, where signatures do not match, the apparatus **208** communicates the computed plurality of meaningful features to a plurality of pre-trained supervised machine learning (ML) classifiers in order to score each HTTP communication and hence, refines the detection of multiple HTTP communications. If any of the score of the HTTP communication exceeds a certain threshold value then an alarm is raised which indicates the HTTP tunnel.

The collecting device arrangement **230** is configured to gather data from data flows occurring between network devices coupled to a data communication network. In an implementation, the collecting device arrangement **230** is implemented as a network interface card (NIC). The collecting device arrangement **230** may support communication protocols for one or more of peer-to-peer network, a hybrid peer-to-peer network, local area networks (LANs), radio access networks (RANs), metropolitan area networks (MANs), wide area networks (WANs), all or a portion of a public network such as the global computer network known as the Internet, a private network and any other communication system or systems at one or more locations. Additionally, the collecting device arrangement **230** supports wired or wireless communication that can be carried out via any number of known protocols, including, but not limited to, Internet Protocol (IP), HTTP protocols, HTTPS, file transfer protocol (FTP), secure shell (SSH) protocol.

The data processing arrangement **232** is configured to process the gathered data to generate a plurality of parameter fields that are representative of characteristics of the data flows. The data processing arrangement **232** is a computational element that is configured to processes instructions that drive the apparatus **208.** The data processing arrangement **232** is further configured to process a subset of the parameter fields and their associated one or more parameters according to one or more pre-defined rules. Additionally, the data processing arrangement **232** include one or more data processing facilities for storing, processing and/or share data and/or set of instructions. Furthermore, the data processing arrangement **232** includes hardware, software, firmware or a combination of these, suitable for temporally storing and processing various information and services accessed by the one or more users using the one or more user equipments. Examples of the data processing arrangement **232** includes, but are not limited to, a processor, a network interface controller, a microprocessor, a microcontroller, ASIC, a complex instruction set computing (CISC) microprocessor, a reduced instruction set (RISC) microprocessor or a very long instruction word (VLIW) microprocessor.

The memory **234** includes suitable logic, circuitry, and/or interfaces that is configured to store instructions (e.g. machine code) executable by the data processing arrangement **232.** Examples of implementation of the memory **234** include, but are not limited to, hardware storage, such as Hard Disk Drive (HDD), Flash memory, Solid-State Drive (SSD), cloud-based storage, or Electrically Erasable Programmable Read-Only Memory (EEPROM), Random Access Memory (RAM), or Read Only Memory (ROM). The memory **234** may be used to store data generated and/or required by the artificial intelligence engine **234A.**

The artificial intelligence engine **234A** is configured to process the subset of parameters to identify whether or not at least a portion of the gathered data corresponding to one or more types of HTTP tunnels being present in the data communication network. In an implementation, the artificial intelligence engine **234A** operates on supervised machine learning technique; for example, the artificial intelligence engine **234A** utilizes recurrent ("recursive") neural networks. In another implementation, alternatively, the artificial intelligence engine **234A** operates on semi-supervised machine learning techniques. In an implementation, the artificial intelligence engine **234A** uses random forest (RF) algorithm as a machine learning algorithm. The random forest (RF) algorithm is based on decision trees and possesses an advantage of being relatively fast with low memory requirement and easily expandable towards adding more trees. The random forest (RF) algorithm possesses another advantage of having a possibility of explaining an importance of each variable used.

The artificial intelligence engine **234A** uses two models (e.g. a model 1 and a model 2) which are trained for a refined detection of two common use cases. The model 1 is focussed on detecting HTTP tunnels which are used for data exfiltration purposes (e.g. sending files across a HTTP tunnel). The model 2 is focussed on detecting HTTP tunnels which are used for remote command execution (e.g. sending commands to an open command prompt or similar listening on other end of a HTTP tunnel). The model 1 and model 2 learn how to make detections based on a given set of examples (or training set). In this embodiment, the model 1 and model 2 are trained for the plurality of meaningful features. In an implementation, the plurality of meaningful features includes an inactivity percentage, a normalized number of HTTP requests, a spread of starting times of requests from a given source to a given destination, superposition of HTTP requests, upload and download channels, number of open ports, number of HTTP requests, a temporal overlap between the upload and the download channel, and a sparsity of HTTP requests. A way of computing the plurality of meaningful features has been described in detail, for example, in FIG. 1. Such plurality of the meaningful features are computed on a large number of benign HTTP communications and in-lab simulated HTTP tunnel communications, which then becomes the training set (i.e. the starting material) to train the model 1 and model 2. The model 1 and the model 2 differ from each other in a way that which HTTP samples are given to each model, for example, exfiltration samples are used for the exfiltration model that is the model 1. The model 1 and the model 2 have an advantage that if the plurality of meaningful features are well engineered then, these models can be retrained according to new benign HTTP samples features and these models learn automatically new behaviors and improve the detection accuracy (also known as low false alarms). An output of each model is a probability with a score from 0 to 1, and 1 is a maximum value. Therefore, a threshold value is specified in order to raise a HTTP tunnel detection which indicates that a given HTTP sample is a HTTP tunnel. There are different ways to decide the threshold value. In this embodiment, a technique known as cross-validation is used to decide the threshold value and tested on a real environment. Although, each model may have a different threshold value. If the score of one of the model 1 and the model 2 is above the threshold value, an alarm is raised for a corresponding HTTP communication. The model 1 and the model 2 are pretrained before deployment with real HTTP tunnel samples and benign HTTP communications. In order to improve the detection rate, the model 1 and the model 2 can be retrained with customer data (i.e. on-the-fly during deployment) which is obtained either by on-site shipping multiple features of the positive samples or collecting benign traffic on-site and thereafter sending the collected benign traffic to a remote server (e.g. a lab) for analysis purpose. After the AI engine **234A** is trained, the AI engine **234A** is deployed in the apparatus **208.**

In operation, the apparatus **208** is configured to detect one or more HTTP tunnels present in a data communication network (e.g. the enterprise network **204**). The collecting device arrangement **230** is configured to gather data from data flows occurring between network devices (such as routers, switches or probe devices to which the internal host **202** is also connected) coupled to the data communication network. The data processing arrangement **232** is configured to process the gathered data to generate a plurality of parameter fields that are representative of characteristics of the data flows. The data processing arrangement **232** is further configured to process a subset of the parameter fields and their associated one or more parameters according to one or more pre-defined rules. The artificial intelligence engine **234A** is configured to process the subset of parameters to identify whether or not at least a portion of the gathered data corresponding to one or more types of HTTP tunnels being present in the data communication network.

In accordance with an embodiment, the collecting device arrangement **230** is configured to gather data from at least one of: routers, switches, mirrored ports (SPANs) and test access point (TAP) devices. In order to process the gathered data for generating a plurality of parameter fields, the data processing arrangement **232** is further configured to use an Internet Protocol Flow Information Export (IPFIX) protocol algorithm to generate the parameters. The one or more pre-defined rules are implemented by the data processing arrangement **232** using at least one of: one or more formulae, one or more algorithmic steps. The data processing arrangement **232** is further configured to process one or more parameters that are representative of a degree of inactivity present in a given communication between a source (e.g. the internal host **202**) and a destination (e.g. the final destination host **212**). The degree of inactivity is derived from a sum of time durations between consecutive IPFIX data flows of the given communication, in relation to a total duration of the given communication. The data processing arrangement **232** is further configured to process in the subset of parameters, one or more parameters that are representative of occurrences of HTTP requests with specific HTTP methods between the given source (e.g. the internal host **202**) and the given destination (e.g. the final destination host **212**) within the data communication network, normalized to a total count of HTTP requests occurring within the data communication network. The HTTP methods of the HTTP requests are categorized into following categories: GET, POST and "OTHER". The "OTHER" HTTP methods include: HEAD, PUT, DELETE, CONNECT, OPTIONS, TRACE, PATCH. The data processing arrangement **232** is further configured to process in the subset of parameters, one or more parameters that are representative of a spread of starting times of requests from the given source to the given destination within the data communication network. The apparatus **208** detects a HTTP tunnel by detecting multiple start requests that occur substantially simultaneously by computing a standard deviation of, or a statistical value of, timestamps of IPFIX data flows, normalized to a total length of an associated communication. The timestamps of IPFIX data flows include start timestamps of IPFIX data flows. The data processing arrangement **232** is further configured to process in the subset of parameters, one or more parameters that are representative of bidirectional communications of HTTP tunnels, by detecting superposition of data flows occurring within the data communication network between the given source and the given destination. The data processing arrangement **232** detects the superposition of data flows by computing a duration of communications having N data flows active within a given duration of time, normalized to a total duration of the communications, wherein N is an integer. The data processing arrangement **232** is further configured to process in the subset of parameters, one or more parameters that are representative of upload and download channels being used for a given communication, to determine whether the channels correspond predominantly to an upload data flow or a download data flow. The apparatus **208** detects a HTTP tunnel by comparing the number of distinct ports that are opened for a given HTTP communication with at least one detection threshold number, where an HTTP tunnel is detected when the number of distinct ports exceeds the at least one detection threshold number. The data processing arrangement **232** is further configured to process in the subset of parameters, one or more parameters that are representative of a temporal overlap between upload and download channels present within the data communication network as a function of elapsed time, wherein the channels are deemed to be overlapping if their data flows are mutually simultaneously active. The apparatus **208** detects a HTTP tunnel when the temporal overlap when normalized over a duration of a communication or temporal window size in which data flows are sampled exceeds at least one detection threshold. The data processing arrangement **232** is further configured to process in the subset of parameters, one or more parameters that are representative of a measure of sparsity of HTTP activity in a given period in which HTTP flows are active, normalized to a total HTTP activity during the given period. The data processing arrangement **232** is further configured to process in the subset of parameters, one or more parameters that are representative of groupings of HTTP communications between a plurality of hosts by considering n-tuples comprising a source address, a destination address, a source port and a destination port, and a protocol wherein "n" is an integer. The artificial intelligence (AI) engine **234A** is further configured to identify from the one or more selected parameters an occurrence of at least one of: a streaming tunnel, wherein a content of a payload protocol is streamed in real-time using a request/response body and a discrete tunnel, wherein a content of a payload protocol is delivered in discrete data chunks in a non-streamed manner. The various embodiments, operations, and variants disclosed in the method **100** of FIG. 1 apply *mutatis mutandis* to the apparatus **208** and the data processing arrangement **232.**

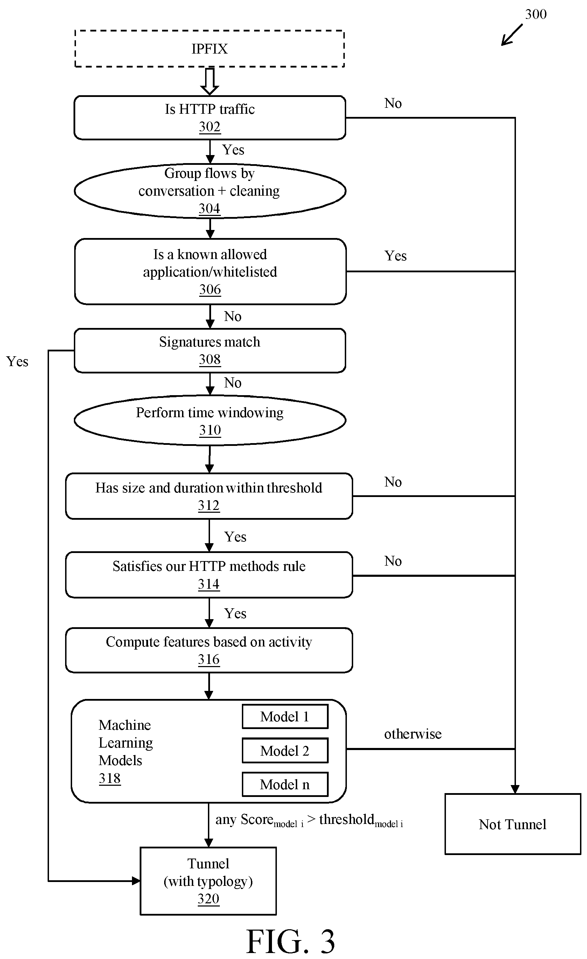

FIG. 3 is a flowchart that depicts exemplary operations for detecting one or more HTTP tunnels present in a data communication network, in accordance with another embodiment of the present disclosure. FIG. 3 is described in conjunction with elements from FIGs. 1, 2A, 2B, and 2C. With reference to FIG. 3, there is shown a flowchart **300** for detecting one or more HTTP tunnels present in a data communication network (e.g. the enterprise network **204**). The flowchart **300** includes operations from **302** to **320.**

At the operation **302,** from an input data, non-HTTP and non-TCP data is filtered out. The reason is that HTTP tunnels use HTTP data to perform the communication. Therefore, the data flows which carry HTTP information and also TCP information are retained at the operation **302.** There are different possibilities to filter out HTTP data such as the use of internet protocol (IP) protocol field and HTTP request field. The IP protocol must be equal to 6 (transmission control protocol (TCP)). The HTTP data are within this traffic and can be extracted by considering the HTTP-related fields from IPFIX. These fields must not be null. In an example case, if the input data is HTTP data then in such a case, the input data is communicated for an operation **304** for further processing. In another example case, if the input data is not HTTP data then in such a case, the input data is not communicated via the HTTP tunnel.

At the operation **304,** the HTTP data is logically grouped between the plurality of hosts by considering the n-tuples such as a source address, a destination address, a source port, a destination port and a used network protocol (e.g. IP protocol). The purpose is to reconstruct the whole HTTP communication. The destination address in the aggregation can be of different nature and its function is only to allow a meaningful aggregation of data flows in a logical way that groups together the data flows that are related to the same communication. The IPFIX field request host specifies the host as a domain, if a uniform resource identifier (URI) is present, an equally valid descriptor (e.g. pre-processed to clean the URI, mitigate text extraction issues and errors and finally extracting the domain) can be obtained. The destination domain gives more insight about the location of the HTTP tunnel tool hosting. The input data to the operation **304** is only HTTP data, therefore, some information can be thrown away (e.g. the IP protocol field, multi-flush due to timeout and caching mechanisms in the probes) for reducing the memory consumption of the apparatus **208** and improving the overall network speed of the data communication system **200A.**

At the operation **306,** any known allowed or whitelisted application is discarded. The information related to the allowed application is obtained by use of different approaches such as URL signature based approach. The operation **306** is optional for a data communication system such as the data communication system **200A** to work; however, this operation **306** improves the detection capabilities by reducing a false positive rate. In an example case, if there is a known allowed or a whitelisted application then in such a case, the communication is not carried out through the HTTP tunnel. In another example case, if there is an unknown application then in such a case, the HTTP tunnel is used.

At the operation **308,** known HTTP tunnels signatures are checked. Some tunnel tools (e.g. Badda, GNU httptunnel and reGeorg) have relatively clear and simple communication structure and method patterns that can be detected via regular expressions and rule based approaches, both per flow and/or per group of flows. These are reported directly at prediction time. In an example case, if the HTTP tunnel signatures match then in such a case, the communication is carried out directly through a HTTP tunnel which is present at the operation **320.** In another example case, if the HTTP tunnel signatures do not match then in such a case, the HTTP data is communicated further for processing at the operation **310.**

At the operation **310,** a time windowing of metadata is performed. The time windowing splits each group of HTTP data in time windows with a length of N minutes. In this embodiment, time window (N) = 20 minutes is used. This means all IPFIX records (or HTTP data) between an internal host (e.g. the internal host **202**) and a remote domain (e.g. the final destination host **212**) within the time window (N) of 20 minutes belong to a same group and the group represents an individual sample which is processed at further operations.

At the operation **312**, a first filtering rule is applied on the cleaned, aggregated and windowed data. The first filtering rule removes the communications which are out of the scope of the disclosure. The first filtering rule considers two threshold conditions, these are data transfer size and duration of a HTTP activity which must be within a specified limit such as a minimum of 5kB of data is exchanged within 5 minutes and there should be at least 5 seconds of HTTP activity. In a case where the threshold conditions of the data transfer size and duration of the HTTP activity meet, then in such a case, further processing is carried out at the operation **314.** In another case, where the threshold conditions of the data transfer size and duration of the HTTP activity do not meet, then in such a case, the communication is not performed through the HTTP tunnel.

At the operation **314,** a second filtering rule is applied based on a behaviour that a HTTP communication must have to perform the tunnel communication. The tunnel communication is performed by use of 2 HTTP methods such as a streaming tunnel and a discrete tunnel. In the streaming (or continuous) tunnel, a content of a payload protocol is streamed in real-time using a request or a response body. In the discrete tunnel, the content of the payload protocol is delivered in discrete data chunks in a non-streamed manner. The streaming tunnel and the discrete tunnel have been described in detail, for example, in FIG. 1. In an example case, where the HTTP communication satisfies aforesaid HTTP methods rule, then in such a case, further processing is carried out at the operation **316.** In another example case, where the HTTP communication does not satisfy aforesaid HTTP methods rule, then in such a case, the communication is not performed through the HTTP tunnel.

At the operation **316,** various features are computed on the HTTP communications and a binary label for each HTTP tunnel candidate is produced. The various features include inactivity percentage, normalized number of HTTP requests, a spread of starting times of requests from a given source to a given destination, superposition of HTTP requests, upload and download channels, number of open ports, number of HTTP requests, temporal overlap between the upload and the download channel, and sparsity of HTTP requests.

At the operation **318,** after computing the various features, the HTTP communication is applied to an artificial intelligence engine such as the artificial intelligence engine **234A** where classifiers based on supervised machine learning are used. The supervised machine learning (ML) classifiers correspond to model 1, model 2 and up to model n. After applying these classifiers, the HTTP communication which is computed with a score greater than a threshold score is communicated through the HTTP tunnel in the operation **320.** In another example case, the HTTP communication which is computed with a score lesser than the threshold score is not communicated through the HTTP tunnel.

The system, method, computer program product, and communicated data described in this disclosure may, of course, be embodied in hardware; e.g., within or coupled to a Central Processing Unit ("CPU"), microprocessor, microcontroller, System on Chip ("SOC"), or any other programmable device. Additionally, the system, method, computer program product, and communicated data may be embodied in software (e.g., computer readable code, program code, instructions and/or data disposed in any form, such as source, object or machine language) disposed, for example, in a computer usable (e.g., readable) medium configured to store the software. Such software enables the function, fabrication, modeling, simulation, description and/or testing of the apparatus and processes described herein.

Such software can be disposed in any known computer usable medium including semiconductor, magnetic disk, optical disc (e.g., CD-ROM, DVD-ROM, and the like) and as a computer data signal embodied in a computer usable (e.g., readable) transmission medium (e.g., carrier wave or any other medium including digital, optical, or analog-based medium). As such, the software can be transmitted over communication networks including the Internet and intranets. A system, method, computer program product, and communicated data embodied in software may be included in a semiconductor intellectual property core (e.g., embodied in HDL) and transformed to hardware in the production of integrated circuits. Additionally, a system, method, computer program product, and communicated data as described herein may be embodied as a combination of hardware and software.

A "computer-readable medium" for purposes of embodiments of the disclosure may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory.

A "processor" or "process" includes any human, hardware and/or software system, mechanism or component that processes data, or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real time," "offline," in a "batch mode," etc. Portions of processing can be performed at different times and at different locations, by different (or the same) processing systems.

Modifications to embodiments of the disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. A method (100) for detecting one or more HTTP tunnels present in a data communication network (204, 222, 224), wherein the method (100) includes:
(a) using a collecting device arrangement (230) to gather data from data flows occurring between network devices (220) coupled to the data communication network (204, 222, 224);
(b) processing the gathered data to generate a plurality of parameter fields that are representative of characteristics of the data flows;
(c) processing a subset of the parameter fields and their associated one or more parameters according to one or more pre-defined rules; and
(d) applying the processed subset of parameters to an artificial intelligence engine (234A) to identify whether or not at least a portion of the gathered data corresponding to one or more types of HTTP tunnels being present in the data communication network (204, 222, 224).

2. A method (100) of claim 1, wherein the method (100) includes in (a) using the collecting device arrangement (230) to gather data from at least one of: routers, switches, mirrored ports (SPANs) and test access point (TAP) devices.

3. A method (100) of claim 1, or 2, wherein the method (100) includes in (c) processing one or more parameters that are representative of a degree of inactivity present in a given communication between a source and a destination.

4. A method (100) of claim 3, wherein the degree of inactivity is derived from a sum of time durations between consecutive IPFIX data flows of the given communication, in relation to a total duration of the given communication.

5. A method (100) of any one of the preceding claims, wherein the method (100) includes in (c) processing, in the subset of parameters, one or more parameters that are representative of occurrences of HTTP requests with specific HTTP methods between a given source and a given destination within the data communication network (204, 222, 224), normalized to a total count of HTTP requests occurring within the data communication network (204, 222, 224).

6. A method (100) of claim 5, wherein the method (100) includes categorizing the HTTP methods of the HTTP requests into following categories: GET, POST and "OTHER".

7. A method (100) of claim 6, wherein the "OTHER" HTTP methods include: HEAD, PUT, DELETE, CONNECT, OPTIONS, TRACE, PATCH.

8. A method (100) of any one of the preceding claims, wherein the method (100) includes in (c) computing, in the subset of parameters, one or more parameters that are representative of a spread of starting times of requests from a given source to a given destination within the data communication network (204, 222, 224).

9. A method (100) of claim 8, wherein the method (100) includes detecting an HTTP tunnel by detecting multiple start requests that occur substantially simultaneously.

10. A method (100) of claim 9, wherein the method (100) includes computing a standard deviation of, or a statistical value of, timestamps of IPFIX data flows, normalized to a total length of an associated communication.

11. A method (100) of any one of the preceding claims, wherein the method (100) includes detecting an HTTP tunnel by comparing the number of distinct ports that are opened for a given HTTP communication with at least one detection threshold number, where an HTTP tunnel is detected when the number of distinct ports exceeds the at least one detection threshold number.

12. A method (100) of any one of the preceding claims, wherein the method (100) includes in (c) processing, in the subset of parameters, one or more parameters that are representative of a temporal overlap between upload and download channels present within the data communication network as a function of elapsed time, wherein the channels are deemed to be overlapping if their data flows are mutually simultaneously active.

13. A method (100) of any one of the preceding claims, wherein the method (100) includes using the artificial intelligence engine (234A) to identify from the one or more selected parameters an occurrence of at least one of:
a streaming tunnel, wherein a content of a payload protocol is streamed in real-time using a request/response body; and
a discrete tunnel, wherein a content of a payload protocol is delivered in discrete data chunks in a non-streamed manner.

14. An apparatus (208) that is configured to detect one or more HTTP tunnels present in a data communication network (204, 222, 224), wherein the apparatus (208) includes:
a collecting device arrangement (230) that is configured to gather data from data flows occurring between network devices coupled to the data communication network (204, 222, 224);
a data processing arrangement (232) that is configured to process the gathered data to generate a plurality of parameter fields that are representative of characteristics of the data flows;
the data processing arrangement (232) that is further configured to process a subset of the parameter fields and their associated one or more parameters according to one or more pre-defined rules; and
an artificial intelligence engine (234A) that is configured to process the subset of parameters to identify whether or not at least a portion of the gathered data corresponding to one or more types of HTTP tunnels being present in the data communication network (204, 222, 224).

15. A computer program product comprising a non-transitory computer-readable storage medium having computer-readable instructions stored thereon, the computer-readable instructions being executable by a computerized device comprising processing hardware to execute a method of any one of claims 1 to 13.

## Patentansprüche

1. Verfahren (100) zum Detektieren eines oder mehrerer in einem Datenkommunikationsnetz (204, 222, 224) vorhandener HTTP-Tunnel, wobei das Verfahren (100) Folgendes beinhaltet:
(a) Verwenden einer Sammelgeräteanordnung (230) zum Erfassen von Daten aus Datenflüssen, die zwischen Netzgeräten (220) auftreten, die an das Datenkommunikationsnetz (204, 222, 224) gekoppelt sind;
(b) Verarbeiten der erfassten Daten, um eine Vielzahl von Parameterfeldern zu generieren, die für Merkmale der Datenflüsse repräsentativ sind;
(c) Verarbeiten einer Teilmenge der Parameterfelder und von einem oder mehreren Parametern, welche diesen zugeordnet sind, gemäß einer oder mehreren vordefinierten Regeln; und
(d) Anwenden der verarbeiteten Teilmenge von Parametern auf eine Engine (234A) für künstliche Intelligenz, um zu identifizieren, ob mindestens ein Teil der erfassten Daten, der einem oder mehreren Typen von HTTP-Tunneln entspricht, in dem Datenkommunikationsnetz (204, 222, 224) vorhanden ist oder nicht.

2. Verfahren (100) nach Anspruch 1, wobei das Verfahren (100) bei (a) Verwenden der Sammelgeräteanordnung (230) zum Erfassen von Daten von mindestens einem des Folgenden beinhaltet: Routern, Switches, gespiegelten Ports (SPANs) und Testzugangspunktgeräten (TAP-Geräten).

3. Verfahren (100) nach Anspruch 1 oder 2, wobei das Verfahren (100) bei (c) Verarbeiten von einem oder mehreren Parametern, die repräsentativ für einen Grad an Inaktivität sind, der in einer gegebenen Kommunikation zwischen einer Quelle und einem Ziel vorhanden ist, beinhaltet.

4. Verfahren (100) nach Anspruch 3, wobei der Grad an Inaktivität aus einer Summe von Zeitdauern zwischen aufeinanderfolgenden IPFIX-Datenflüssen der gegebenen Kommunikation im Verhältnis zu einer Gesamtdauer der gegebenen Kommunikation abgeleitet wird.

5. Verfahren (100) nach einem der vorhergehenden Ansprüche, wobei das Verfahren (100) bei (c) Verarbeiten, in der Teilmenge von Parametern, von einem oder mehreren Parametern, die für Auftreten von HTTP-Anfragen mit spezifischen HTTP-Verfahren zwischen einer gegebenen Quelle und einem gegebenen Ziel innerhalb des Datenkommunikationsnetzes (204, 222, 224) repräsentativ sind, normalisiert auf eine Gesamtzählung von HTTP-Anfragen, die innerhalb des Datenkommunikationsnetzes (204, 222, 224) auftreten, beinhaltet.

6. Verfahren (100) nach Anspruch 5, wobei das Verfahren (100) Kategorisieren der HTTP-Verfahren der HTTP-Anfragen in die folgenden Kategorien beinhaltet: GET, POST und "OTHER".

7. Verfahren (100) nach Anspruch 6, wobei die "OTHER"-HTTP-Verfahren Folgendes beinhalten: HEAD, PUT, DELETE, CONNECT, OPTIONS, TRACE, PATCH.

8. Verfahren (100) nach einem der vorhergehenden Ansprüche, wobei das Verfahren (100) bei (c) Berechnen, in der Teilmenge von Parametern, eines oder mehrerer Parameter beinhaltet, die für eine Streuung von Startzeiten von Anfragen von einer gegebenen Quelle an ein gegebenes Ziel innerhalb des Datenkommunikationsnetzes (204, 222, 224) repräsentativ sind.

9. Verfahren (100) nach Anspruch 8, wobei das Verfahren (100) Detektieren eines HTTP-Tunnels durch Detektieren mehrerer Startanfragen, die im Wesentlichen gleichzeitig auftreten, beinhaltet.

10. Verfahren (100) nach Anspruch 9, wobei das Verfahren (100) Berechnen einer Standardabweichung oder eines statistischen Wertes von Zeitstempeln von IPFIX-Datenflüssen, normalisiert auf eine Gesamtlänge einer zugeordneten Kommunikation, beinhaltet.

11. Verfahren (100) nach einem der vorhergehenden Ansprüche, wobei das Verfahren (100) Detektieren eines HTTP-Tunnels durch Vergleichen der Anzahl an distinkten Ports, die für eine gegebene HTTP-Kommunikation geöffnet sind, mit mindestens einer Detektionsschwellenanzahl beinhaltet, wobei ein HTTP-Tunnel detektiert wird, wenn die Anzahl an distinkten Ports die mindestens eine Detektionsschwellenanzahl überschreitet.

12. Verfahren (100) nach einem der vorhergehenden Ansprüche, wobei das Verfahren (100) bei (c) Verarbeiten, in der Teilmenge von Parametern, eines oder mehrerer Parameter, die für eine zeitliche Überlappung zwischen Upload- und Download-Kanälen, die innerhalb des Datenkommunikationsnetzes vorhanden ist, repräsentativ sind, als eine Funktion der verstrichenen Zeit beinhaltet, wobei die Kanäle als überlappend angesehen werden, wenn ihre Datenflüsse gegenseitig gleichzeitig aktiv sind.

13. Verfahren (100) nach einem der vorhergehenden Ansprüche, wobei das Verfahren (100) Verwenden der Engine (234A) für künstliche Intelligenz beinhaltet, um aus dem einen oder den mehreren ausgewählten Parametern ein Auftreten von mindestens einem des Folgenden zu identifizieren:
einem Streaming-Tunnel, wobei ein Inhalt eines Nutzlastprotokolls unter Verwendung eines Anfrage/Antwort-Körpers in Echtzeit gestreamt wird; und
einem diskreten Tunnel, wobei ein Inhalt eines Nutzlastprotokolls in diskreten Datenpaketen in einer nicht gestreamten Weise geliefert wird.

14. Vorrichtung (208), die dazu konfiguriert ist, einen oder mehrere in einem Datenkommunikationsnetz (204, 222, 224) vorhandene HTTP-Tunnel zu detektieren, wobei die Vorrichtung (208) Folgendes beinhaltet:
eine Sammelgeräteanordnung (230), die dazu konfiguriert ist, Daten aus Datenflüssen, die zwischen Netzgeräten auftreten, die an das Datenkommunikationsnetz (204, 222, 224) gekoppelt sind, zu erfassen;
eine Datenverarbeitungsanordnung (232), die dazu konfiguriert ist, die erfassten Daten zu verarbeiten, um eine Vielzahl von Parameterfeldern zu generieren, die für Merkmale der Datenflüsse repräsentativ sind;
wobei die Datenverarbeitungsanordnung (232) ferner dazu konfiguriert ist, eine Teilmenge der Parameterfelder und einen oder mehrere Parametern, welche diesen zugeordnet sind, gemäß einer oder mehreren vordefinierten Regeln zu verarbeiten; und
eine Engine (234A) für künstliche Intelligenz, die dazu konfiguriert ist, die Teilmenge von Parametern zu verarbeiten, um zu identifizieren, ob mindestens ein Teil der erfassten Daten, der einem oder mehreren Typen von HTTP-Tunneln entspricht, in dem Datenkommunikationsnetz (204, 222, 224) vorhanden ist oder nicht.

15. Computerprogrammprodukt, umfassend ein nicht transitorisches, computerlesbares Speichermedium mit darauf gespeicherten computerlesbaren Anweisungen, wobei die computerlesbaren Anweisungen durch ein computergestütztes Gerät, das Verarbeitungshardware umfasst, ausführbar sind, um ein Verfahren nach einem der Ansprüche 1 bis 13 auszuführen.

## Revendications

1. Procédé (100) de détection d'un ou de plusieurs tunnels HTTP présents dans un réseau de communication de données (204, 222, 224), dans lequel le procédé (100) comporte :
(a) l'utilisation d'un agencement de dispositif de collecte (230) pour collecter des données à partir de flux de données se produisant entre des dispositifs de réseau (220) couplés au réseau de communication de données (204, 222, 224) ;
(b) le traitement des données collectées pour générer une pluralité de champs de paramètres qui sont représentatifs des caractéristiques des flux de données ;
(c) le traitement d'un sous-ensemble des champs de paramètres et leurs un ou plusieurs paramètres associés selon une ou plusieurs règles prédéfinies ; et
(d) l'application du sous-ensemble traité de paramètres à un moteur d'intelligence artificielle (234A) pour identifier si au moins une partie des données collectées correspondant à un ou plusieurs types de tunnels HTTP sont présents ou non dans le réseau de communication de données (204, 222, 224).

2. Procédé (100) selon la revendication 1, dans lequel le procédé (100) comporte (a) l'utilisation de l'agencement de dispositif de collecte (230) pour collecter des données provenant d'au moins l'un des éléments suivants : routeurs, commutateurs, ports en miroir (SPAN) et dispositifs de point d'accès de test (TAP).

3. Procédé (100) selon la revendication 1 ou 2, dans lequel le procédé (100) comporte en (c) le traitement d'un ou de plusieurs paramètres qui sont représentatifs d'un degré d'inactivité présent dans une communication donnée entre une source et une destination.

4. Procédé (100) selon la revendication 3, dans lequel le degré d'inactivité est dérivé d'une somme de durées temporelles entre des flux de données IPFIX consécutifs de la communication donnée, par rapport à une durée totale de la communication donnée.

5. Procédé (100) selon l'une quelconque des revendications précédentes, dans lequel le procédé (100) comporte en (c) le traitement, dans le sous-ensemble de paramètres, d'un ou de plusieurs paramètres qui sont représentatifs d'occurrences de demandes HTTP avec des procédés HTTP spécifiques entre une source donnée et une destination donnée dans le réseau de communication de données (204, 222, 224), normalisées à un nombre total de demandes HTTP se produisant dans le réseau de communication de données (204, 222, 224).

6. Procédé (100) selon la revendication 5, dans lequel le procédé (100) comporte la catégorisation des méthodes HTTP des demandes HTTP dans les catégories suivantes : GET, POST et « AUTRE ».

7. Procédé (100) selon la revendication 6, dans lequel les « AUTRES » procédés HTTP comportent : HEAD, PUT, DELETE, CONNECT, OPTIONS, TRACE, PATCH.

8. Procédé (100) selon l'une quelconque des revendications précédentes, dans lequel le procédé (100) comporte en (c) le calcul, dans le sous-ensemble de paramètres, d'un ou de plusieurs paramètres qui sont représentatifs d'une répartition des heures de début de demandes d'une source donnée à une destination donnée dans le réseau de communication de données (204, 222, 224).

9. Procédé (100) selon la revendication 8, dans lequel le procédé (100) comporte la détection d'un tunnel HTTP en détectant plusieurs demandes de démarrage qui se produisent sensiblement simultanément.

10. Procédé (100) selon la revendication 9, dans lequel le procédé (100) comporte le calcul d'un écart type ou d'une valeur statistique d'horodatages de flux de données IPFIX, normalisés à une longueur totale d'une communication associée.

11. Procédé (100) selon l'une quelconque des revendications précédentes, dans lequel le procédé (100) comporte la détection d'un tunnel HTTP en comparant le nombre de ports distincts qui sont ouverts pour une communication HTTP donnée avec au moins un nombre de seuil de détection, où un tunnel HTTP est détecté lorsque le nombre de ports distincts dépasse l'au moins un nombre de seuil de détection.

12. Procédé (100) selon l'une quelconque des revendications précédentes, dans lequel le procédé (100) comporte en (c) le traitement, dans le sous-ensemble de paramètres, d'un ou de plusieurs paramètres qui sont représentatifs d'un chevauchement temporel entre les canaux de téléchargement et de télé-versement présents dans le réseau de communication de données en fonction du temps écoulé, dans lequel les canaux sont considérés comme se chevauchant si leurs flux de données sont mutuellement actifs simultanément.

13. Procédé (100) selon l'une quelconque des revendications précédentes, dans lequel le procédé (100) comporte l'utilisation du moteur d'intelligence artificielle (234A) pour identifier à partir d'un ou de plusieurs paramètres sélectionnés une occurrence d'au moins l'un des éléments suivants :
un tunnel de streaming, dans lequel le contenu d'un protocole de charge utile est diffusé en temps réel en utilisant un corps de demande/réponse ; et
un tunnel discret, dans lequel un contenu d'un protocole de charge utile est délivré en blocs de données discrets de manière non diffusée.

14. Appareil (208) configuré pour détecter un ou plusieurs tunnels HTTP présents dans un réseau de communication de données (204, 222, 224), dans lequel l'appareil (208) comporte :
un agencement de dispositif de collecte (230) qui est configuré pour collecter des données provenant du flux de données se produisant entre des dispositifs de réseau couplés au réseau de communication de données (204, 222, 224) ;
un agencement de traitement de données (232) qui est configuré pour traiter les données collectées afin de générer une pluralité de champs de paramètres qui sont représentatifs des caractéristiques des flux de données ;
l'agencement de traitement de données (232) qui est également configuré pour traiter un sous-ensemble des champs de paramètres et leurs un ou plusieurs paramètres associés selon une ou plusieurs règles prédéfinies ; et
un moteur d'intelligence artificielle (234A) qui est configuré pour traiter le sous-ensemble de paramètres afin d'identifier si au moins une partie des données collectées correspondant à un ou plusieurs types de tunnels HTTP est présente dans le réseau de communication de données (204, 222, 224).

15. Produit de programme informatique comprenant un support de stockage lisible par ordinateur non transitoire sur lequel sont stockées des instructions lisibles par ordinateur, les instructions lisibles par ordinateur étant exécutables par un dispositif informatisé comprenant un matériel de traitement pour exécuter un procédé selon l'une quelconque des revendications 1 à 13.
